Europäisches Patentamt

(19) European Patent Office

Office européen des brevets

(11) Publication number: **0 217 460**

**A1**

(12) **EUROPEAN PATENT APPLICATION**

(21) Application number: 86201632.6

(22) Date of filing: 23.09.86

(51) Int. Cl.⁴: **G 11 B 7/09**
G 11 B 19/24, G 11 B 33/08
G 11 B 21/10

(30) Priority: 27.09.85 NL 8502635

(43) Date of publication of application:
08.04.87 Bulletin 87/15

(84) Designated Contracting States:
BE DE FR GB IT NL

(71) Applicant: N.V. Philips' Gloeilampenfabrieken
Groenewoudseweg 1
NL-5621 BA Eindhoven(NL)

(72) Inventor: Janssen, Johannes c/o Int. Octrooibureau B.V.
Prof. Holstlaan 6
NL-5656 AA Eindhoven(NL)

(72) Inventor: Van Rosmalen, Gerard c/o Int. Octrooibureau B.V.
Prof. Holstlaan 6
NL-5656 AA Eindhoven(NL)

(72) Inventor: Van Alfen, Maarten c/o Int. Octrooibureau B.V.
Prof. Holstlaan 6
NL-5656 AA Eindhoven(NL)

(72) Inventor: Rouws, Petrus c/o Int. Octrooibureau B.V.
Prof. Holstlaan 6
NL-5656 AA Eindhoven(NL)

(74) Representative: Peters, Rudolf Johannes et al,
INTERNATIONAAL OCTROOIBUREAU B.V. Prof.
Holstlaan 6
NL-5656 AA Eindhoven(NL)

(54) Apparatus for reading information from a record carrier.

(57) In addition to the customary servo control devices (15, 18 and 21) for radial tracking, focussing and speed control respectively an apparatus for reading, for example, a Compact Disc (3) comprises three feed-forward control loops (30, 40 and 50) which each comprise an acceleration transducer (31, 41 and 51) which in the case of shocks and vibrations give the optical read unit (5) the same angular acceleration, the optical read unit (5) the same linear acceleration and the motor (2) the same angular acceleration as the apparatus (1) itself, so that the apparatus is less sensitive to shocks and vibrations.

FIG.1

"Apparatus for reading information from a record carrier".

The invention relates to an apparatus for at least reading a record carrier provided with a spiral track containing information, which apparatus comprises a motor for driving the record carrier, a read device comprising an optical read unit for reading the information from the record carrier, a signal-processing device for processing the information read, a first control device for controlling the radial position of the read unit relative to the record carrier in response to a radial-error signal generated by the read device, a second control device for controlling the distance between the read unit and the record carrier in response to a focus-error signal generated by the read device, and a third control device for controlling the tangential position of the read unit relative to the record carrier in response to a tangential-error signal generated by the signal processing device.

Such an apparatus is, for example, a Compact Disc Digital Audio player for reading a Compact Disc containing digitized audio information. Alternatively such an apparatus may be a Laservision player for reading a video disc containing analog video information.

An apparatus of the type defined in the opening paragraph is known from, for example Philips Technical Review, Vol. 40, 1982, No. 6, which describes a Compact Disc player. Such a player comprises a laser unit whose light beam which has been reflected and modulated by the disc is detected and subsequently converted into an electric signal, which is applied to a signal processing device which recovers the original audio information from the applied signal.

The laser unit is mounted on an arm which is pivotable about an axis by means of a motor. This enables

0217460

the laser unit to be moved over the disc in a radial direction. The laser beam must follow the track very accurately. For this purpose the player comprises a first or tracking control device which in response to a radial-error signal from the read device controls the radial position of the laser unit so as to reduce the error signal. In addition, the laser beam should remain accurately focused on the disc despite a possible out-of-flatness of the disc. For this purpose the apparatus comprises a second or focus-control device which keeps the laser beam focused on the disc in response to an error signal which is also generated by the read device.

The speed of rotation of the disc is controlled to decrease from the centre towards the periphery of the disc as an inverse linear function of the radial position of the laser unit. The track on the disc then passes the laser beam with a substantially constant linear velocity, so that information is read with a substantially constant velocity. The information read is decoded in the signal-processing device and is applied to a buffer means at a frequency which is governed by the speed of rotation disc, the information being read from the buffer means at a standard clock frequency. The apparatus is constructed in such a way that if the read-in frequency and read-out frequency are equal the buffer means is 50% filled. In the case of a difference between these two frequencies a so-called tangential-error signal is generated by means of which the motor speed is adapted. The presence of the buffer means ensures that speed variations of the motor do not give rise to jitter in the audio output signal.

In principle the three above-mentioned control devices are feedback systems in which a correction is performed in response to a detected error so as to reduce the error. These three control devices are capable of coping with errors occurring during normal use of the player.

However, if the apparatus is constructed as a portable player or if the player is mounted in a car

**0217460**

rotational and translational vibrations and shocks may occur which can no longer be eliminated by said control devices. In particular rotations may give rise to comparatively large changes in the position of the read unit relative to the disc, which cannot be corrected completely by the tracking device. Moreover, in the case of rotations comparatively large speed variations of the motor may occur. In principle these variations can be coped with by providing the signal-processing device with a larger buffer store. However, without such a large buffer store these speed variations may give rise to comparatively large error signals which cannot be eliminated by the motor control at such a rate that the buffer store remains always filled. Translations may give rise to comparatively large variations in the distance between the disc and the read device which can no longer be corrected completely by the focus-control device.

In principle, it is possible to increase the negative-feedback factors of the existing control devices in order to correct these larger errors. However, this has the disadvantage that it is more likely to give rise to instabilities in the control devices.

Therefore it is the object of the invention to provide an apparatus which is less sensitive to rotational and/or translational vibrations and shocks.

According to the invention an apparatus of the type defined in the opening paragraph is characterized in that the apparatus comprises at least one acceleration transducer for generating a control signal for additional feed-forward control in at least one of the three control devices. The invention is based on the recognition of the fact that during the occurrence of shocks and vibrations an acceleration transducer enables parts which are sensitive to rotations and translations to be subjected to substantially the same movement as the apparatus itself, so that these parts experience hardly any positional or speed variations relative to the apparatus.

A first embodiment of the invention in which the optical read unit is mounted on an arm which is pivotable about an axis is characterized in that the apparatus is provided with an angular-acceleration transducer for generating a control signal for feed-forward control of the arm in conjunction with the first control device. By controlling the read unit in a radial direction by means of the signal supplied by the acceleration transducer the read unit experiences substantially the same angular acceleration as the record carrier which is coupled to the device, so that the position of the read unit relative to the record carrier is hardly affected by rotations.

This first embodiment may be characterized further in that the angular-acceleration transducer comprises two linear-acceleration transducers with parallel sensitive directions.

In accordance with a further embodiment the angular-acceleration transducer as well as each of the linear-acceleration transducers may be a piezo-electric acceleration transducer.

However, alternatively the first embodiment may be characterized further in that the angular-acceleration transducer comprises the signal-processing device, the control signal being constituted by the tangential-error signal. It has been found that the tangential-error signal is a very good measure of the magnitude of rotations so that this error signal is suitable as a control signal for the feed-forward control of the tracking device. This has the advantage that a separate acceleration transducer is not needed.

In addition to apparatus in which the read unit can be pivoted about an axis there are also systems in which the read unit is mounted on a radially movable slide. In such a case a second embodiment of the invention in which the optical read unit is mounted on a slide radially movable slide so as to be movable relative to the slide in at least a radial direction may then be characterized in that the apparatus is provided with a linear-acceleration transducer for generating a control signal for feed-forward control op the optical read unit in conjunction with the first control device. In this embodiment the slide provides coarse control and the optical read unit provides fine control of the radial position.

A third embodiment of an apparatus in accordance with the invention in which the optical read unit is mounted on a radially movable slide may then be characterized in that the apparatus is provided with a linear-acceleration transducer for generating a control signal for feed-forward control of the slide in conjunction with the first control device. In this embodiment the radial position of the read unit is fully dictated by the radial position of the slide.

A fourth embodiment of the invention is characterized in that the apparatus is provided with a linear-acceleration transducer for generating a control signal for feed-forward control in conjunction with the second control device. By controlling the read unit in the vertical direction by means of the signal obtained from the linear-acceleration transducer the read unit experiences substantially the same linear acceleration as the record carrier, so that their mutual position is substantially maintained in the event of translational vibrations.

This fourth embodiment may be characterized further in that the acceleration transducer is a piezo-electric acceleration transducer.

A fifth embodiment of the invention, in which the third control device is adapted to control the speed of the motor, is characterzed in that the apparatus is provided with an angular-acceleration transducer for generating a control signal for feed-forward control of the motor in conjunction with the third control device. As a result of this the motor experiences the same angular-acceleration as the apparatus, so that the speed of rotation of the motor and hence that of the record carrier remain constant relative to the apparatus.

If the apparatus is also provided with a first feed-forward control device, this embodiment may be characterized further in that the first and the third feed-forward control comprise one common angular-acceleration transducer.

A sixth embodiment of the invention in which the optical read unit is mounted on a radially movable slide, the optical read unit being at least tangentially movable relative to the slide and the third control device being adapted to control the position of the read unit, is characterized in that the apparatus is provided with a linear-acceleration transducer for generating a control signal for feed-forward control of the read unit in a tangential direction in conjunction with the third control unit.

Embodiments of the invention will now be described in more detail, by way of example, with reference to the accompanying drawings in which

Fig. 1 shows a first embodiment of the invention,

Fig. 2 shows an example of an angular-acceleration transducer for the apparatus shown in Fig. 1,

Fig. 3 shows an example of a linear-acceleration transducer for the apparatus of Fig. 1, and

Fig. 4 shows a second embodiment of the invention.

Fig. 5 shows a third embodiment of the invention.

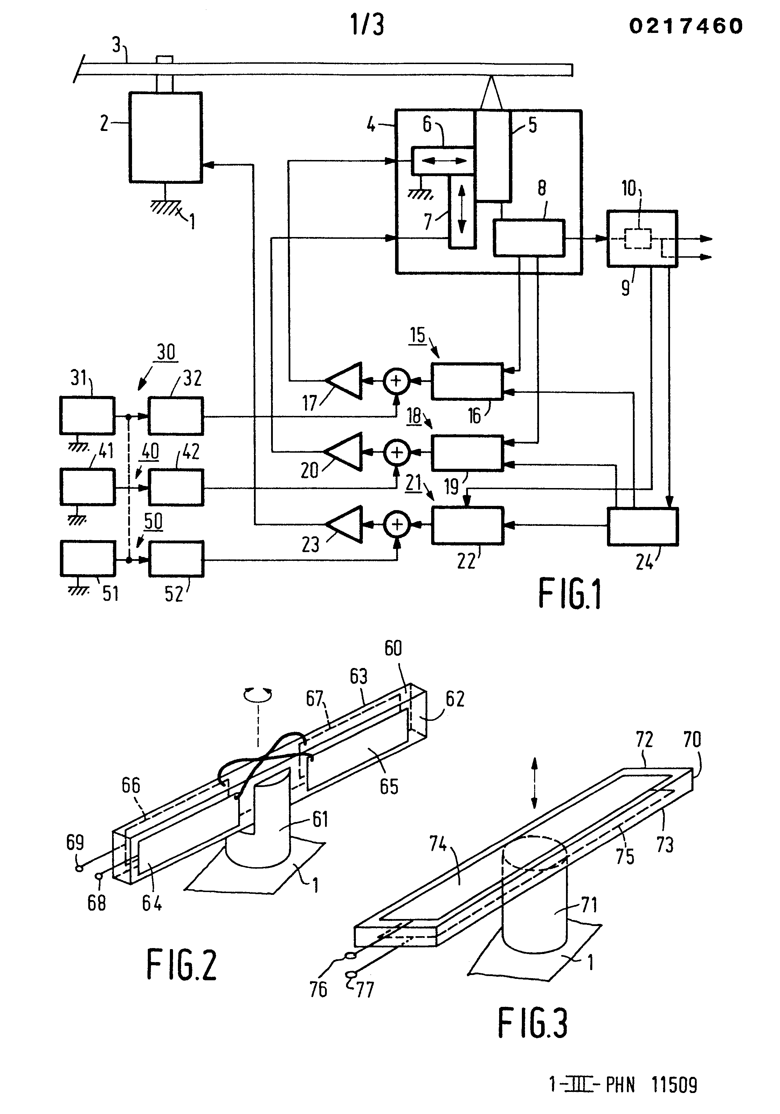

Fig. 1 shows an apparatus which is a first embodiment of the invention. The Figure shows schematically the construction of a Compact Disc Digital Audio player in so far as it is relevant to the present invention. The player 1 comprises a motor 2 for rotating the Compact Disc 3 constituting the record carrier. This Compact Disc is provided with a spiral track of pits containing the digital audio information. This Compact Disc 3 is read by means of a read device 4 comprising an pptical read unit 5 provided with a laser. This read unit 5 is pivotable about an axis and can be moved over the disc 3 in a radial direction by means of a drive motor 6, which is shown schematically. The laser beam from the read unit 5 is focused on the disc and can be moved in a vertical direction relative to the disc 3 by actuator coils 7, shown schematically. The laser light which is reflected and modulated by the disc 3 is detected by a detection unit 8 and converted into an electric signal, which is applied to a signal-processing device 9 comprising a buffer means 10, which processing device inter alia decodes and corrects the signal to produce the original analog audio signal on its output.

In order to ensure that the laser beam from the read unit 5 accurately follows the track on the disc 3 despite possible tracking errors, the apparatus comprises a tracking device 15. In the event of tracking errors of the laser beam the detection unit 8  of the read device 4 generates a radial-error signal which is applied to a control amplifier 17 via a control circuit 16, which amplifier controls the radial drive motor 6 in such a way that the radial error signal is reduced.

In order to keep the laser beam in focus on the disc 3 over the entire length of the track the apparatus comprises a focus-control device 18. In the case of incorrect focusing of the laser beam the detection unit 8 generates an error signal which is applied to a control amplifier 20 via a control circuit 19, which amplifier controls the actuator coils 7 so as to reduce the focus-error signal.

The apparatus further comprises a motor-speed control 21 for controlling the motor speed which decreases as an inverse linear function of the displacement of the read unit from the centre towards the periphery of the disc 3. The signal-processing device 9 generates a tangential-error signal in the case of deviations between a frequency at which the audio information is read into the buffer means 10 and which is dictated by the speed of rotation of the motor and a fixed frequency at which the information is read out of this buffer means 10. This error signal is applied to a control circuit 22 which

0217460

controls a control amplifier 23 which in its turn controls the motor 2 so as to reduce the tangential-error signal. In order to prevent jitter in the audio output signal as a result of speed variations of the motor the buffer means 10 is always kept 50% filled.

The apparatus further comprises a control unit 24 which enables or disables the control devices depending on the instructions applied to the control unit by the user.

So far the apparatus is identical to the known apparatus. The apparatus further comprises an angular-acceleration transducer 31 whose output signal is fed to the control amplifier 17 _via_ a control unit 32, which amplifier controls the radial drive motor 6. In this way a feed-forward control loop 30 is formed which upon the occurrance of rotational shocks and vibrations gives the read unit 5 substantially the same angular acceleration as the apparatus itself, so that the position of the read unit 5 relative to the record carrier hardly changes. This precludes large tracking errors which can ho longer be corrected completely by the tracking device 15. In the present embodiment the control amplifier 17 of the control device 15 forms part of the feed-forward control loop 30. However, this lastmentioned control loop may also comprise a separate control amplifier.

The apparatus further comprises a second feed-forward control loop 40 comprising a linear-acceleration transducer 41 whose output signal is applied to the control amplifier 20 _via_ a control circuit 42 to control the actuator coils 7 by means of which the read unit 5 can be moved in a vertical direction. If translational vibrations and shocks occur in a direction perpendicular to the disc this may give rise to such a large change in the distance between the disc 3 and the read unit 5 that the resulting focus-error signal can no longer be corrected by the control device 19. By means of the feed-forward control loop 40 the read unit 5 is driven with the same acceleration as the apparatus itself, so that the distance between the read unit 5 and the disc 3 and consequently the focusing of the read beam on the disc 3 remains practically unchanged. Again the feed-forward control loop 40 may comprise a separate control amplifier instead of a control amplifier which it has in common with the control device 18.

In the case of rotational shocks and vibrations the speed of rotation of the motor relative to the device 1 also varies. In order to preclude errors which can no longer be corrected by the control device 21 the apparatus is provided with a third feed-forward control loop 50. This loop comprises an angular-acceleration transducer 51 whose output signal is applied to the input of a control amplifier 23 _via_ a control circuit 52, which amplifier controls the motor 2. By means of this feed-forward control loop 50 the motor 2 is given the same angular acceleration as the apparatus itself when rotational vibrations occur, so that the speed of rotation of the motor remains substantially constant relative to the apparatus 1. In the present embodiment the angular-acceleration transducer 51 may be combined advantageously with the angular-acceleration transducer 31 of the feed-forward control loop 13, as is shown in broken lines in the Figure. In principle, this third feed-forward control loop may be dispensed with by making the buffer means 10 in the signal-processing device 9 so large that it enables motor-speed variations in the case of shocks and vibrations to be compensated for. Further, it is obviously also possible to combine a larger buffer store with a feed-forward control loop. It is to be noted that in the feed-forward control loop 50 the motor may also be controlled _via_ a separate control amplifier.

The construction of the angular-acceleration transducers 31 and 51 and of the linear-acceleration transducers 51 is irrelevant to the present invention. Fig. 2 shows an example of an angular-acceleration transducer. The transducer comprises a rectangular piezo-electric crystal 60 which is clamped at its centre in a holder 61 secured to

0217460

the apparatus. The two surfaces 62 and 63 which extend perpendicularly to the sensitive direction of the crystal each carry two electrodes, namely the electrodes 64, 65 and the electrodes 66, 67 respectively, represented by broken lines. The electrodes 64 and 67 as well as the electrodes 65 and 66 are electrically interconnected. The transducer output signal is taken from the terminals 68 and 69 which are connected to the electrodes 64 and 66 respectively. If the apparatus is subjected to angular acceleration the parts of the piezo-electric crystal 60 on each side of the holder 61 will rotate in the same direction about the longitudinal axis of the holder, so that the cross-connected electrodes experience the same distortion. The voltage appearing on the terminals 68 and 69 is then a measure of the angular acceleration. The transducer is insensitive to translations, because the parts on both sides of the holder 61 are then deformed in opposite directions, so that the voltage produced in one part is compensated for by the opposite voltage produced in the other part.

Fig. 3 shows an example of a linear-acceleration transducer for the feed-forward control loop 40 of Fig. 1. The transducer now comprises a piezo-electric crystal 70 which is secured at its centre to a holder 71 which is fixedly connected to the apparatus. The two surfaces 72 and 73 which extend perpendicularly to the sensitive direction of the crystal 70 carry an electrode 74 and an electrode 75 respectively. The output voltage appears on the terminals 76 and 77 which are connected to these electrodes. In the case of translations in a direction perpendicular to the surfaces 72 and 73 the two parts situated on opposite sides of the holder 71 will deflect in the same direction. The voltage appearing on the terminals 76 and 77 is then a measure of the magnitude of the linear acceleration. The transducer is insensitive to rotations.

It is to be noted that the angular-acceleration transducer of Fig. 2 may be replaced by two linear-accele-

**0217460**

ration transducers of the type shown in Fig. 3, in which
case the piezo-electric crystals should be turned through
$90^{\circ}$ about the longitudinal axis of the crystals. These
two linear-acceleration transducers may then be arranged
at arbitrary locations in the apparatus in such a manner
that the sensitive directions of the two transducers
are parallel. The sum of the two output voltages is then
a measure of the magnitude of the angular-acceleration.

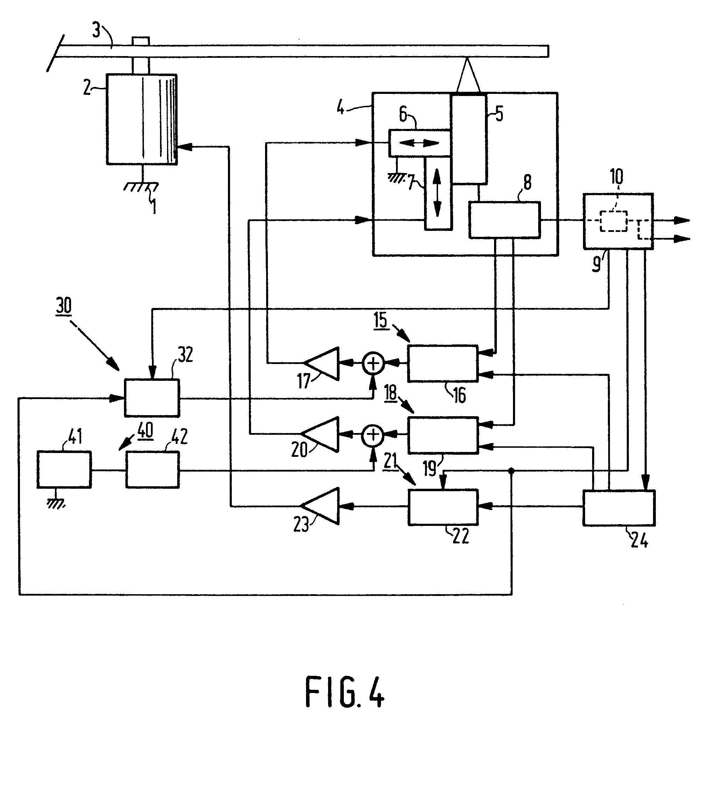

Fig. 4 shows a second embodiment of the invention,
in which identical parts bear the same reference numerals
as in Fig. 1. In this embodiment the angular-acceleration
transducer for the feed-forward control loop 30 is formed
by the signal-processing unit 9, the trangential-error
signal constituting the output signal of the transducer.
The tangential-error signal is a reliable measure of
the magnitude of rotational vibrations and shocks. The
magnitude of this tangential-error signal depends on the
position of the read unit 5 relative to the centre of the
disc 3. For a specific rotational shock the tangential-
error signal will be smaller when a track nearer the centre
is read than when a track nearer the periphery is read.
However, the signal-processing unit 9 can also provide
information on the instantaneous position of the read
unit. A control signal is then also applied to the
control_circuit 32, so that on the output of this circuit
a control signal is obtained which is independent of the
position of the read unit and which is determined only by
the magnitude of the rotation. In the present embodiment
the buffer means 10, from which the tangential-error
signal is obtained, is so large that a separate feed-
forward control for controlling the motor speed is not
necessary.

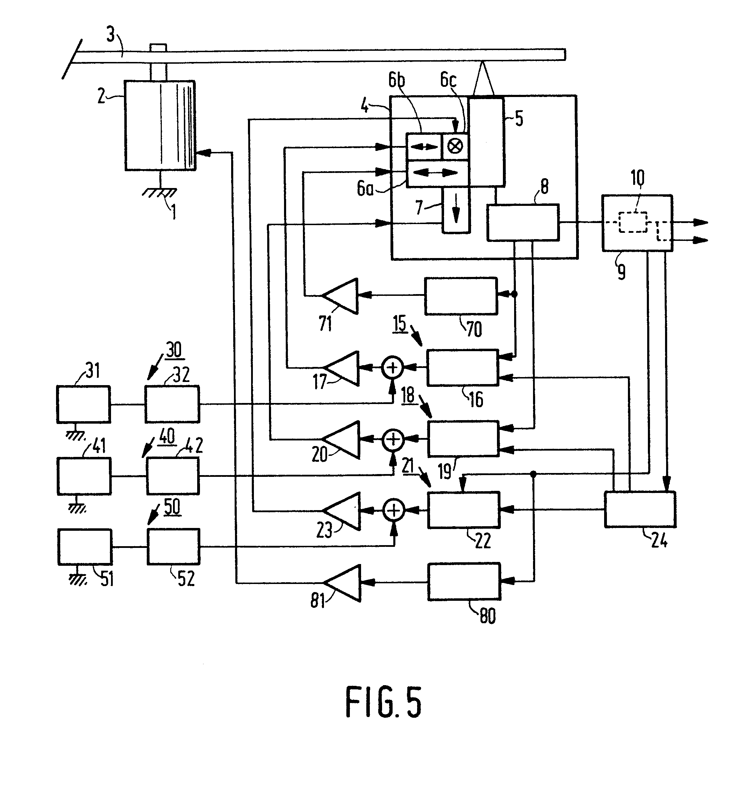

Fig. 5 shows a third embodiment of the invention
in which identical parts bear the same reference numerals
as in Figure 1. In the present embodiment the read unit 5
is not mounted on an arm which is pivotable about an axis
but is arranged on a slide which is radially movable by
drive means 6a. The read unit 5 is arranged on this slide

0217460

in such a way that it is radially movable by drive means 6b and tangentially movable by drive means 6c. The drive means 6a provide coarse control and the drive means 6b provide fine control of the radial position of the read unit 5. The drive means 6b are controlled by means of the control device 15 in a same way as in the apparatus shown in Figure 1 in response to the radial-error signal. The control signal for the drive means 6a may also be derived from the radial error signal by determining the average value of this signal in a control circuit 70, for example by means of a low-pass filter, and applying the resulting signal to a control amplifier 71 connected to the drive means 6a. The output signal of the control amplifier 23 of the third control device 21 which is based on the tangential-error signal, is not applied to the motor 2 but to the tangential-drive means 6c. The motor 2 may be controlled, for example _via_ a control circuit 80 and a control amplifier 81, by a signal which is proportional to the average value of the tangential-error signal. The feed-forward control loops 30, 40 and 50 are identical to those shown in Figure 1, but in the present embodiment the acceleration transducers 31 and 51 should not be angular-acceleration transducers but linear-acceleration transducers whose sensitive directions extend perpendicularly to each other, because in the present embodiment the read unit 5 is not rotated about an axis but is translated in two mutually perpendicular directions.

In another embodiment the read unit may be rigidly mounted on a radially movable slide. The radial position of the read unit is then depends directly on the radial position of the slide. This embodiment is then identical to that shown in Figure 1 except for the transducer 31 in the feed-forward control loop 30, which should be a linear-acceleration transducer instead of an angular-acceleration transducer.

The invention is not limited to the present embodiments. Within the scope of the invention many variants are conceivable to those skilled in the art. The apparatus in accordance with the invention is not limited to the read-out of Compact Disc carrying digital audio information. The apparatus may also be employed for reading, for example Compact Discs used as read-only memories for digital data (CD-ROM). Alternatively, the apparatus in accordance with the invention may be an apparatus for reading video discs. Such an apparatus is described in, for example, Philips Technical Review Vol. 33, No. 7, pages 178 to 193. In such an apparatus the tangential-error signal cannot only be reduced by correcting the motor speed with a control signal derived from this error signal but also by correcting the position of a so-called tangential mirror by means of this control signal, which mirror serves for correcting the tangential position of the laser spot on the disc. The principle of compensating for motor speed variations as a result of rotational vibrations by means of feed-forward control in response to a signal from an angular-acceleration transducer may also be applied to motors used in portable audio and video recorders.

## CLAIMS

1.     An apparatus for at least reading a record carrier provided with a spiral track containing information, which apparatus comprises a motor for driving the record carrier, a read device comprising an optical read unit for reading the information from the record carrier, a signal-processing device for processing the information read, a first control device for controlling the radial position of the read unit relative to the record carrier in response to a radial-error signal generated by the read device, a second control device for controlling the distance between the read unit and the record carrier in response to a focus-error signal generated by the read device, and a third control device for controlling the tangential position of the read unit relative to the record carrier in response to a tangential-error signal generated by the signal processing device, characterized in that the apparatus comprises at least one acceleration transducer for generating a control signal for additional feed-forward control in at least one of the three control devices.

2.     An apparatus as claimed in claim 1, in which the optical read unit is mounted on an arm which is pivotable about an axis, characterized in that the apparatus is provided with an angular-acceleration transducer for generating a control signal for feed-forward control of the arm in conjunction with the first control device.

3.     An apparatus as claimed in Claim 2, characterized in that the angular-acceleration transducer comprises two linear-acceleration transducers with parallel sensitive directions.

4.     An apparatus as claimed in Claim 2, characterized in that the angular-acceleration transducer comprises the signal-processing device, the control signal being constituted by the tangential-error signal.

5.        An apparatus as claimed in Claim 1, in which the optical read unit is mounted on a radially movable slide so as to be movable relative to the slide in at least a radial direction, characterized in that the apparatus is provided with a linear-acceleration transducer for generating a control signal for feed-forward control of the optical read unit in conjunction with the first control device.

6.        An apparatus as claimed in Claim 1, in which the optical read unit is mounted on a radially movable slide, characterized in that the apparatus is provided with a linear-acceleration transducer for generating a control signal for feed-forward control of the slide in conjunction with the first control device.

7.        An apparatus as claimed in Claim 1, 2, 3, 4, 5 or 6 characterized in that the apparatus is provided with a linear-acceleration transducer for generating a control signal for feed-forward control in conjunction with the second control device.

8.        An apparatus as claimed in any one of the preceding Claims, in which the third control device is adapted to control the speed of the motor, characterized in that the apparatus is provided with an angular-acceleration transducer for generating a control signal for feed-forward control of the motor in conjunction with the third control device.

9.        An apparatus as claimed in Claim 8 as appendant to Claim 2, characterized in that the first and the third feed-forward control comprise one common angular-acceleration transducer.

10.       An apparatus as claimed in any one of the preceding Claims 1 to 7, in which the optical read unit is mounted on a radially movable slide, the optical read unit being at least tangentially movable relative to the slide and the third control device being adapted to control the position of the read unit, characterized in that the apparatus is provided with a linear-acceleration trans-

**0217460**

ducer for generating a control signal for feed-forward control of the read unit in a tangential direction in conjunction with the third control device.

11.        An apparatus as claimed in Claim 2, 3, 5 or 6, 7, 8, 9 or 10, characterized in that the at least one acceleration transducer is a piezo-electric acceleration transducer.

FIG.1

FIG.2

FIG.3

0217460

FIG. 4

2-Ⅲ-PHN  11509

0217460

FIG.5

0217460

European Patent
Office

EUROPEAN SEARCH REPORT

Application number

EP 86 20 1632

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | PATENTS ABSTRACTS OF JAPAN, vol. 9, no. 161 (P-370)[1884], 5th July 1985; & JP-A-60 35 377 (OLYMPUS KOGAKU KOGYO K.K.) 23-02-1985 * Abstract * | 1,5,6, 10 | G 11 B 7/09<br>G 11 B 19/24<br>G 11 B 33/08<br>G 11 B 21/10 |
| Y | IDEM | 11 | |
| X | PATENTS ABSTRACTS OF JAPAN, vol. 9, no. 58 (P-341)[1781], 14th March 1985; & JP-A-59 193 545 (MITSUBISHI DENKI K.K.) 02-11-1984 * Abstract * | 1 | |
| Y | IDEM | 11 | TECHNICAL FIELDS SEARCHED (Int Cl 4) |
| A | IDEM | 2,7,9 | G 11 B |
| X | JP-A-60 121 538 (MATSUSHITA DENKI SANGYO K.K.) (29-06-1985) & PATENTS ABSTRACTS OF JAPAN, vol. 9, no. 276 (P-402)[1999], 2nd November 1985 * Abstract * | 1 | |
| Y | | 11 | |
| A | | 2,5-7 | |

--- -/-

The present search report has been drawn up for all claims

| Place of search | Date of completion of the search | Examiner |
|---|---|---|
| THE HAGUE | 31-10-1986 | DAALMANS F.J. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| X | JP-A-60 121 578 (MATSUSHITA DENKI SANGYO K.K.) (29-06-1985) & PATENTS ABSTRACTS OF JAPAN, vol. 9, no. 276 (P-402)[1999], 2nd November 1985 * Abstract * | 1 | |
| Y | | 11 | |
| A | | 2,5-7 | |
| Y | US-A-4 532 802 (YEACK-SCRANTON et al.) * Column 3, lines 10-49; column 4, lines 35-61; column 5, line 43 - column 6, line 7; figures 1,3 * | 11 | |
| P,X | EP-A-0 164 642 (MATSUSHITA ELECTRIC INDUSTRIAL CO. LTD.) * Whole document * | 1,5-7, 10,11 | TECHNICAL FIELDS SEARCHED (Int. Cl 4) |
| A | WO-A-8 501 605 (SONY CORP.) * Abstract * | 1,6,10 | |
| D,A | PHILIPS TECHNICAL REVIEW, vol. 40, no. 6, 10th September 1982, pages 151-179, Eindhoven, NL; M.G. CARASSO et al.: "The compact disc digital audio system" * Pages 151-155 * | 1,2,4, 8 | |

---  -/-

The present search report has been drawn up for all claims

| Place of search | Date of completion of the search | Examiner |
|---|---|---|
| THE HAGUE | 31-10-1986 | DAALMANS F.J. |

European Patent
Office

# EUROPEAN SEARCH REPORT

## DOCUMENTS CONSIDERED TO BE RELEVANT

Page   3

| Category | Citation of document with indication, where appropriate, of relevant passages | Relevant to claim | CLASSIFICATION OF THE APPLICATION (Int Cl 4) |
|---|---|---|---|
| A | ELECTRONICS AND WIRELESS WORLD, vol. 91, no. 1594, August 1985, pages 52-55, London, GB; J.R. WATKINSON: "Compact disc players; part 1: Details of compact disc player circuitry" * Whole document * | 1,4,8 | |
| | ----- | | |

TECHNICAL FIELDS
SEARCHED (Int Cl 4)

The present search report has been drawn up for all claims

| Place of search | Date of completion of the search | Examiner |
|---|---|---|
| THE HAGUE | 31-10-1986 | DAALMANS F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1603 03 82